# EUROPEAN PATENT SPECIFICATION

(11) **EP 1 193 084 B1**
(45) Date of publication and mention of the grant of the patent: **24.11.2004**
(21) Application number: 01308238.3
(22) Date of filing: 27.09.2001
(51) Int. Cl.: B60C 9/20, B60C 17/00

(54) **Pneumatic run-flat tire**
Notlaufreifen
Pneumatique pouvant rouler à plat

(30) Priority: 27.09.2000 JP 2000294798
(43) Date of publication of application: 03.04.2002
(73) Proprietor: BRIDGESTONE CORPORATION, Tokyo 104-0031 (JP)
(72) Inventor: Hiruma, Masato, Chuo-ku, Tokyo 104-0031 (JP)
(74) Representative: Whalley, Kevin

(56) References cited:
- EP-A- 0 937 588
- WO-A-98/56598
- US-A- 4 928 741
- US-A- 5 529 105
- PATENT ABSTRACTS OF JAPAN vol. 2000, no. 02, 29 February 2000 (2000-02-29) -& JP 11 310016 A (BRIDGESTONE CORP), 9 November 1999 (1999-11-09)
- PATENT ABSTRACTS OF JAPAN vol. 017, no. 114 (M-1377), 9 March 1993 (1993-03-09) & JP 04 300701 A (SUMITOMO RUBBER IND LTD), 23 October 1992 (1992-10-23)

## Description

The present invention relates to a pneumatic run-flat tire which is enabled by reinforcing its side wall portions to run a distance, when the tire is punctured such that the internal pressure thereof is lowered, to a safe place for repairs while supporting the load in that state. More particularly, the invention relates to a pneumatic run-flat tire which is made as light-weight as possible so as to maintain the ride comfort and the low rolling resistance for a normal running time while retaining sufficient runnability in the flat tire condition.

There is known a pneumatic tire (which may be called a "run-flat tire" or a "run-flat runnable tire") which can run in the flat tire condition and enables safe running for a distance even if the tire is punctured so that its internal pressure is lowered to the atmospheric level. As this run-flat tire, there are well known: a roll flat support type tire, in which an annular roll flat support made of a metal or a synthetic resin is attached to the rim portion in the air chamber of the tire; a tire filled with light-weight elastic (foaming material); or a side reinforcing type tire in which the sidewall portion thereof is reinforced by arranging a rubber layer having a generally crescent section and having a relatively high hardness on the sidewall inner face of a carcass from the bead portion to the shoulder portion of the side wall inner face of the tire.

Of these types, the roll flat support type tire can reliably support the load at the time of running in the flat tire condition and thus it is applied to a cargo transporting vehicle or a military car having four or more wheels needing little consideration in respect of the unsprung weight, and the side reinforcing type tire is frequently used for a passenger car or a two-wheeled vehicle which has a relatively low loading burden, allows easy assembling of its rims and aims at reducing the unsprung weight which exerts serious influences on the ride comfort and the fuel consumption. Where the run-flat tire of the side reinforcing type is actually applied to an automobile, what is most often pointed out as a major problem is that the tire has a heavy weight and a high rolling resistance, for which counter-measures have been earnestly desired.

However, in the case of the side reinforcing type, the run-flat performance thereof is achieved by thickening the side (wall) portion of the tire. Therefore, the weight is increased naturally to raise the rolling resistance so that the run-flat tires, especially those attached to a passenger car or a light van, are unsatisfactory because of poor fuel economy at normal running.

Attention is also drawn to the disclosures of JP-A- 11310016, EP-A-0937588 and US-A-5529105.

Considering the facts thus far described, an object of the present invention is to provide a radial tire which can run in the flat tire condition and be used mainly for a passenger car, which exhibits a satisfactory ride comfort and a low rolling resistance at normal running while effecting sufficient durability and reliability during running in the flat tire condition.

The present invention in accordance with claim 1 has been conceived to achieve the above-specified object, and the inventors of the present invention have completed the invention by making investigations to make the rigidity reinforcing structure of the side portion of the tire and the light-weight of the tire members compatible in an advanced manner.

According to the present invention, there is provided a pneumatic run-flat tire comprising: a carcass layer made of at least one radial carcass ply extended toroidally between a pair of bead cores and having two end portions each wound around said bead core from the axially inner side to the outer side of the bead portions; a side rubber layer arranged on the outer side of the carcass layer at the side region in the axial direction of the tire to form an outer side portion; a tread rubber layer arranged on the outer side of the carcass layer at the crown region in the tire radial direction to form a treading portion; a belt layer composed of at least two belt plies arranged between said tread rubber layer and said carcass layer at the crown region to form a reinforcing belt; an inner liner arranged on the entire face of said carcass layer at the inner side of the tire to form an airtight layer; a bead filler arranged between a carcass layer main body portion extending from said one bead core to the other and a turn-up portion wound on said one bead core; and a side reinforcing layer interposed between said carcass layer and said inner liner from the bead portion to the shoulder portion and including at least one reinforcing rubber layer having a generally crescent sectional shape along the rotating axis of the tire, wherein at least one belt ply of said belt layer comprises metal single wires with a rubber coating, and most of the metal single wires in said ply are presented as metal wire bundles each composed of a plural n-number of metal wires arranged in parallel without being twined, the metal wire bundles being arrayed planarly in parallel to each other and being spaced from each other with a distance therebetween in the tire widthwise direction, and said inner liner has a thickness of 0.1 to 0.3 mm.

According to the invention, said reinforcing layer has the generally crescent sectional shape and the material such as rubber used therein has a loss tangent (tan δ) of no more than 0.25 at 25 °C.

Preferably said reinforcing rubber layer has the generally crescent sectional shape and the material such as rubber used therein has a hardness (Hd) of no less than 75 at 25 °C.

In the present specification, "Hd" represents hardness measured at 25 ºC by using a type-A testing device for the durometer hardness test according to JIS K 6253-1993.

Further, in the present specification, "tan δ" represents a loss tangent indicated as the ratio of a loss modulus of elasticity to a dynamic modulus of elasticity, which was obtained as a result of measurement of the moduli at 25 °C by using a spectrometer manufactured by Toyo Seiki co. in the conditions in which the statically-applied initial load was 160 g, the average strain amplitude was 1 % and the number of test frequency was 52 Hz, according to the prescription of "the tension of a load waveform or a flexural waveform".

In further preferred aspects of the invention:
- said side rubber layer has a maximum thickness of no more than 10 mm.
- the ratio (D_{*S*}/D_{*L*}) of the shorter dimension D_{*S*} to the longer dimension D_{L} of the metal wire bundle in a section normal to said metal wire bundle is about 1/n for the number n of the metal single wires in said metal wire bundle.
- the number n of the metal single wires in said metal wire bundle is from two to six.
- the metal single wires in said belt layer have a wire diameter of 0.18 to 0.35 mm and a tensile strength of 3130 to 4410 MPa.
- the metal single wires in said belt layer have a wire diameter of 0.19 to 0.28 mm and a tensile strength of 3430 to 4410 MPa.

Yet further, in the present specification, the "tensile strength" of a metal single wire (a monofilament) represents a tensile strength thereof obtained by measuring the tensile strength (unit: N) of a monofilament sample, by using a tension tester under the following conditions, in a state in which the monofilament sample was fixed to upper and lower chucks.

| | |
|---|---|
| Length of the sample | 200 ± 1 mm |
| Pulling rate | 20 ± 2 mm/minute |
| Capacity | A load cell of 0-980 N or that which is switchable |

- the material of the metal single wires in said belt layer contains at least 0.7 wt. % of carbon.
- the metal single wires in said belt layer is arranged so as to form an angle of 15 to 35 degrees with respect to the equatorial plane of the tire.
- said inner liner contains 60 to 320 parts by weight of a plate-shaped inorganic material having an aspect ratio of 5 to 30, with respect to 100 parts by weight of a rubber component which composed of 0 to 40 parts by weight of butyl-based rubber containing no less than 40 wt. % of halogenated butyl rubber and 60 to 100 parts by weight of diene-based rubber.
- at least one cap layer composed of organic fibers coated with rubber is interposed between said tread rubber layer and said belt layer.

The invention will be further described with reference to the accompanying drawings, wherein:
Fig. 1A is a sectional view showing a cord of the prior art, in which metal wires are twined into a 1 x 5 structure, and Fig. 1B is a side elevation of the same cord;
Fig. 2 is a sectional view showing an array of bundles of three metal wires according to one embodiment of the present invention;
Fig. 3 is a sectional view showing a lefthand half of a run-flat tire according to one embodiment of the present invention; and
Fig. 4 is a sectional view showing a lefthand half of a run-flat tire according to another embodiment of the present invention.

A run-flat running radial tire of the present invention, including a reinforcing rubber layer having a generally crescent sectional shape so as to enhance the rigidity of the side portion thereof, mainly achieves in its light weight by including a strong belt ply made of metal wire bundles composed of untwined metal single wires arranged in parallel, and by including an inner liner having a thickness of 0.1 to 0.3 mm.

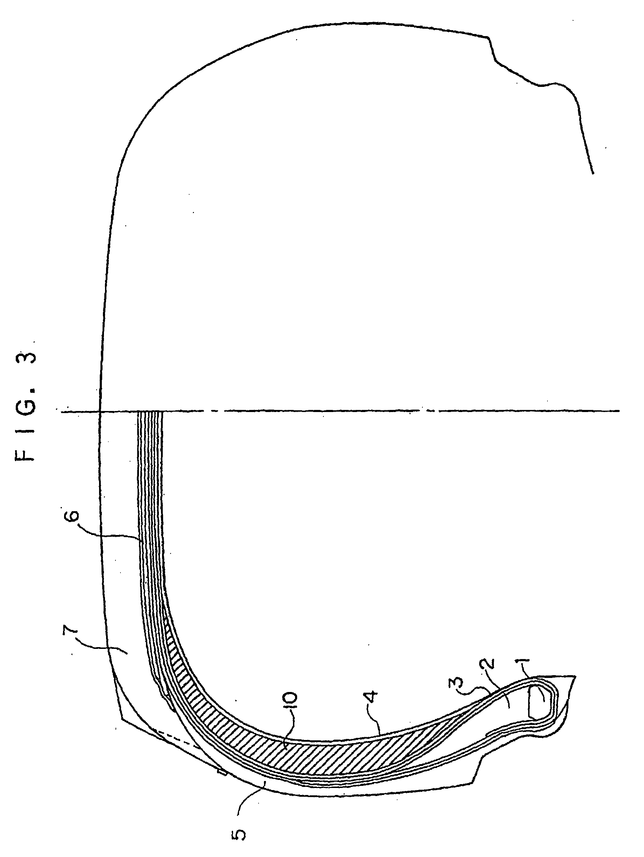

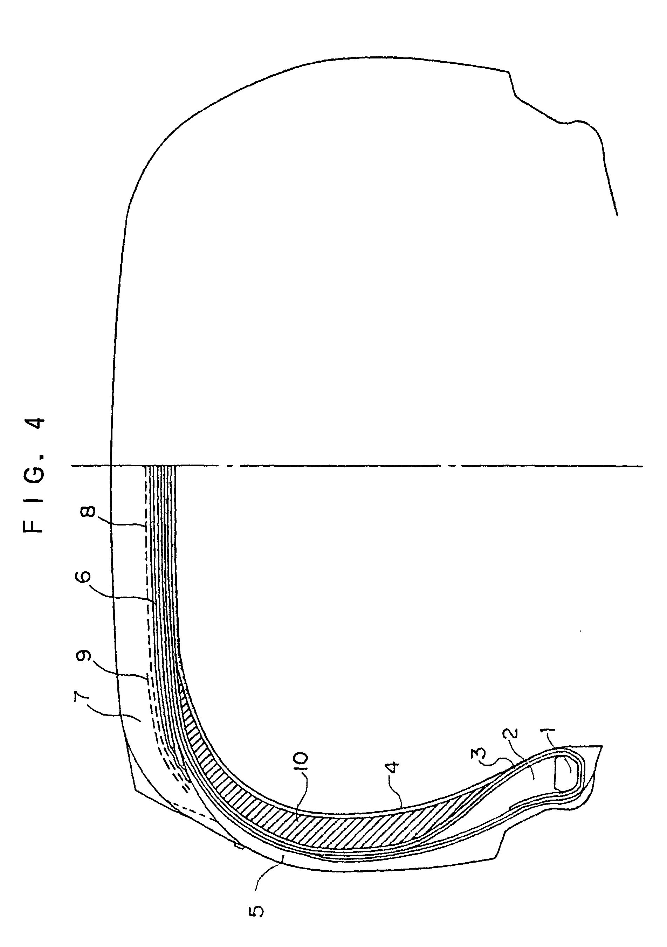

The tire of the invention includes a side reinforcing layer (as hatched at 10 in Figs. 3 and 4) which is extended from the bead portion to the shoulder portion, which is sandwiched between the carcass layer and the inner liner, which has a generally crescent sectional shape, along the rotating axis of the tire, and which is made of at least one reinforcing rubber layer. By supporting the load with the rigidity of the side reinforcing layer in a flat tire condition, the tire can effect running in the flat tire condition. As the reinforcing rubber layer having the generally crescent sectional shape, there can be suitably selected and employed various types of rubbers having high rigidity which can provide the run-flat performance with the tire e.g., rubber compositions having high rigidity and a light specific gravity. Preferable examples of the rubber compositions having high rigidity include: a rubber compound (blend) having high rigidity containing a relatively large amount of reinforcing carbon black or other organic/inorganic reinforcing agent; a rubber composition having high rigidity containing organic/inorganic short fibers (sectional shapes of the short fibers may be hollow or different from each other).

The material such as rubber used in the reinforcing rubber layer having the generally crescent sectional shape preferably has a hardness (Hd) of 75 or more at 25°C. With such a high hardness of the rubber (material) used for the reinforcing rubber layer, running in the flat tire condition for a long distance is reliably ensured. On the other hand, when the material such as rubber used in the reinforcing rubber layer has a hardness of less than 75, the rigidity of the sidewall portion may be insufficient, whereby there may be some cases in which the tire cannot support the vehicle weight at the time of a flat tire condition and fail to run in the flat tire condition for a sufficient distance.

On the other hand, the material such as rubber used in the generally crescent-shaped reinforcing rubber layer has a loss tangent (tangent δ) of 0.25 or less at 25 °C. By these low-energy loss characteristics, heat generation at the reinforcing rubber layer is sufficiently suppressed so that running in the flat tire condition for a long distance is more likely to be successfully achieved. When the material such as rubber used in the reinforcing rubber layer has a loss tangent exceeding 0.25 at 25 °C, the reinforcing rubber layer is likely to be softened or experience separation due to heat generated as the temperature rises during the running in the flat tire condition.

Here, the side reinforcing layer is preferred to have a maximum thickness of 10 mm or less, which thickness will hardly worsen the ride comfort, the bending fatigue or the rolling resistance of the tire. The side reinforcing layer does not need to have a thickness exceeding 10 mm in structural terms, and a side reinforcing layer whose thickness exceeds 10 mm rather often worsens the ride comfort, the bending fatigue or the rolling resistance.

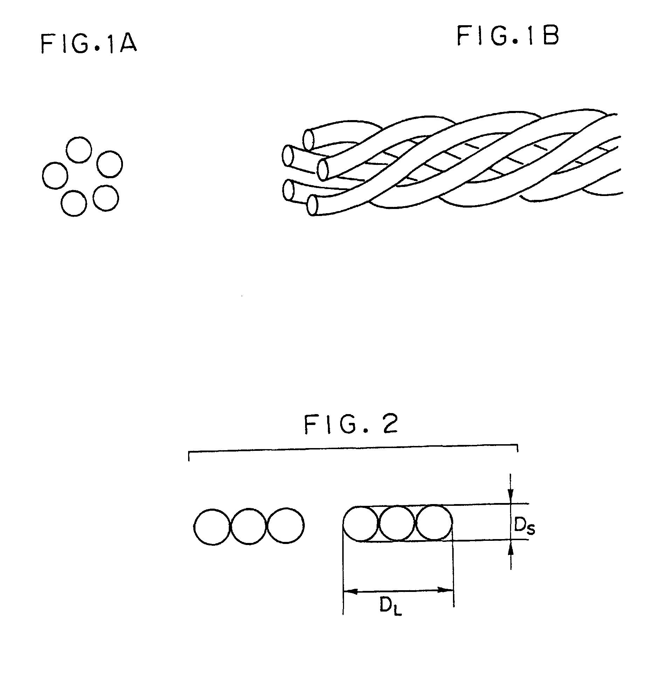

At least one belt ply which constitutes the belt layer of the run-flat tire of the present invention is characterized in that metal single wires are coated with rubber; in that most of the metal single wires in the ply are present as metal wire bundles each having untwined plural n-number of metal wires arranged in parallel, as shown in Fig. 2 (presenting three-wire bundles); and in that the metal wire bundles are arranged in a plane in parallel spaced from each other with a distance therebetween in a widthwise direction. In the belt ply for the conventional run-flat tire, as shown in Fig. 1A (a sectional view) and Fig. 1B (a side elevation), there are employed the so-called "twined wire cord" constituted with several twined metal single wires (the twined wire cord is coated with rubber). In this conventional construction, the belt ply must have a considerable thickness for effecting the rubber coating. On the other hand, the belt ply of the present invention can be made thin, light and strong due to the aforementioned construction.

The metal wire bundle of the belt ply of the invention is preferably formed into a bundle in which the ratio (D_{S}/D_{L}) of a shorter dimension D_{S} to a longer dimension D_{L} of a section normal to the metal wire bundle, as exemplified by the three wires in Fig. 2, is about 1/n. If the ratio (D_{S}/D_{L}) of the shorter dimension to the longer dimension of the metal wire bundle is greater than the value of 1/n, that is if the metal wire bundles are not arranged in a planar array, the thickness of the coating rubber inevitably increases, whereby reduction of the belt layer weight may not be achieved.

The number (n) of the metal single wires in the metal wire bundle of the present invention is preferred to be from two to six. If the number of the in-bundle metal wires is seven or more, it may frequently become difficult to array the metal wires planarly in parallel to each other in the belt ply, that is to manufacture the metal wire bundle at the short/long dimension ratio (D_{S}/D_{L}) of about 1/n. In consideration of two aspects of reducing the weight of the belt and enhancing the productivity of the members, the number of in-bundle metal wires more advantageous for implementing the present invention is three or four.

The wire diameter of the metal single wires in the belt layer of the invention is preferably 0.18 to 0.35 mm or more preferably 0.19 to 0.28 mm. In terms of reducing the weight of the belt, the weight reduction thereof should be attempted by thinning the wire diameter. However, if the diameter of the metal wires becomes smaller than 0.18 mm, many metal wires have to be embedded to maintain the required strength of the belt, whereby the distance between the metal wire bundles may be narrowed to cause or facilitate separation in the belt layer. On the other hand, if the diameter of the metal wires are made thick to have a wire diameter of more than 0.35 mm, there increases a strain which is generated at the interface between the metal wires and the rubber at the time of bending the belt layer so that the metal wires are more likely to be broken when the metal wires are greatly deformed by a quick turn of the tire, etc.

The tensile strength of the metal single wires of the present invention is preferably 3130 to 4410 MPa and more preferably 3430 to 4410 MPa. If the tensile strength is less than 3130 MPa, the number of metal wires has to be increased to maintain the required strength of the belt, whereby weight reduction of the belt may not be achieved. On the other hand, the metal wires having a tensile strength of more than 4410 MPa are difficult to manufacture and may not allow mass production thereof.

The present invention employs the untwined metal single wires, i.e. so-called "monofilaments" as they are. The metal cords having the twined structure of 1 x 3, 1 x 4 or 1 x 5, as have been employed in the prior art, are subjected to deterioration of strength by approximately 3 % due to the loss in strength caused by twining. However, the bundled belt of the metal single wires of the present invention has a high strength-utilizing rate and exhibits high tensile strength at the initial stage of load application, in particular, which is advantageous.

The metal single wires of the present invention are preferably made of a steel material containing at least 0.7 wt.% of carbon or preferably at least 0.8 wt.% of carbon. The metal wires made of a steel material having a carbon content of less than 0.7 wt.% may have insufficient tensile strength to be used as the belt reinforcing material of the tire. On the other hand, the metal wires made of a steel material having a carbon content of more than 0.9 wt.% may be difficult to draw and thus are likely to exhibit poor productivity.

In the present invention, by arraying the bundles of the untwined metal single wires planarly in parallel to each other for use, it is possible to provide the technique which can thin the belt layer thereby to significantly reduce the amount of the coating rubber to be used, allowing the weight reduction of the belt.

In the present invention, the angle formed by the metal single wires with respect to the equatorial plane of the tire in the belt layer is preferably 15 to 35 degrees. If the angle formed by the metal single wires with respect to the equatorial plane is less than 15 degrees, the belt durability may be insufficient. On the other hand, if the belt angle formed by the metal single wires with respect to the equatorial plane is more than 35 degrees, the "hoop effect" may be insufficient and the radial characteristics of the belt may not be fully exhibited.

The inner liner of the invention is characterized in that its thickness is 0.1 to 0.3 mm, so that it contributes to weight reduction of the tire while maintaining the airtightness with the minimum layer thickness necessary. It is difficult to prevent the inner liner from having undesirably high air permeability, if its thickness is less than 0.1 mm. When the thickness of the inner liner exceeds 0.3 mm, weight reduction of the tire cannot be achieved in a sufficient manner.

There is no specific restriction or limit to the rubber composition of the inner liner of the present invention. However, it is preferable that the rubber composition contains 60 to 320 parts by weight of a plate-shaped inorganic material having an aspect ratio of 5 to 30, with respect to 100 parts by weight of a rubber component which is constituted with: 0 to 40 parts by weight of butyl-based rubber containing 40 wt. % or more of halogenated butyl rubber; and 60 to 100 parts by weight of diene-based rubber.

The butyl-based rubber is not specifically limited as long as it contains 40 wt. % or more of halogenated butyl rubber, but can be selected, in an appropriate manner, from the known compounds in accordance with the application. Preferable example of the butyl-based rubber include halogenated copolymers of isobutylene-paramethylstyrene. One type of butyl-based rubber may be used solely or two types or more thereof may be used in a combined manner. The butyl-based rubber may exhibit insufficient resistance to air permeability if the content of the halogenated butyl rubber is 40 wt. % or less. Here, the content of the halogenated butyl rubber is preferably 60 to 100 wt. %, or more preferably 80 to 100 wt. %, in terms of obtaining excellent resistance to air permeability. The content of the butyl-based rubber in the rubber component is to be in a range of 0 to 40 parts by weight (inclusive of 0 parts by weight and exclusive of 40 parts by weight). A content over 40 parts by weight thereof may cause easy generation of cracks at a low temperature and result in poor low-temperature characteristics, which is not preferable. Accordingly, the content of the butyl-based rubber is more preferably in a range of 0 to 35 parts by weight.

The diene-based rubber is not particularly limited and can be suitably selected from the known ones in accordance with the application. Examples of the diene-based rubber include natural rubber, epoxide natural rubber, copolymers of styrene-butadiene, copolymers of styrene-isoprene, polyisoprene or polybutadiene. These diene-based rubber compounds can be used solely or as a combination of two or more types. Of these diene-based rubbers, the natural rubber and/or the polybutadiene rubber are preferable because of the excellent low temperature properties thereof. The content of the diene-based rubber in the aforementioned rubber component is preferably 60 to 100 parts by weight. If the content is less than 60 parts by weight, cracks are easily generated at a low temperature and the low temperature properties deteriorate, which is not preferable. It is therefore preferable that the content of the diene-based rubber is 65 to 100 parts by weight. When the content of the diene rubber falls within the above-specified range, such a problem as described above does not occur, which is advantageous in terms of achieving excellent low temperature properties.

The type of the aforementioned plate-shaped inorganic material is not particularly restricted as long as the shape or structure thereof is planar and flat, and any suitable type can be selected according to the application. Examples of the plate-like inorganic material include a laminar inorganic material. Specific examples of the plate-shaped inorganic material include mica, clay, silica, alumina or a composite thereof. Among these examples, at least one type of plate-shaped inorganic material selected from kaolin clay, or a composite of water-containing silica and alumina is preferable. The aforementioned plate-shaped inorganic material compounds can be used solely or as a combination of two or more types. Any commercially available product which is suitable for application may be used.

The aspect ratio of the plate-shaped inorganic material is preferably in a range of 5 to 30 (inclusive of 5 and exclusive of 30) and more preferably in a range of 8 to 20. Here, the aspect ratio means the ratio of the longer dimension with respect to the thickness of the plate-shaped inorganic material. If the aspect ratio is less than 5, the rubber composition for the inner liner exhibits poor resistance to air permeability, that is, does not have sufficient internal pressure retainablility, whereby there is a possibility that the inner liner cannot be gauged thin. If the aspect ratio is 30 or more, the plate-shaped inorganic material exhibits poor workability, whereby the unvulcanized sheet may be cut or holed, or the cord embedded inside the tire may be exposed to the outside. On the other hand, if the aspect ratio is within the above-specified range, such a problem as described above does not occur. That is, the rubber composition for the inner liner exhibits excellent resistance to air permeability and sufficient internal pressure retainability, whereby the inner liner can be gauged thin and exhibits an excellent workability without generation of cuts or holes in the unvulcanized sheet, which is significantly advantageous.

The content of the plate-shaped inorganic material in the rubber composition for the inner liner is preferably in a range of 60 to 320 parts by weight and more preferably in a range of 100 to 300 parts by weight with respect to 100 parts by weight of the rubber component. If the content of the plate-shaped inorganic material is less than 60 parts by weight, the rubber composition for the inner liner exhibits poor resistance to air permeability, that is, does not have sufficient internal pressure retainability, whereby there is a possibility that the inner liner cannot be gauged thin. If the content of the plate-shaped inorganic material exceeds 320 parts by weight, the rubber composition exhibits poor workability, whereby the unvulcanized sheet may be cut or holed, or the cord embedded inside the tire may be exposed to the outside. On the other hand, if the content of the plate-shaped inorganic material is within the above-specified range, such a problem as described above does not occur. That is, the rubber composition for the inner liner exhibits excellent resistance to air permeability and sufficient internal pressure retainability, whereby the inner liner can be gauged thin and exhibits an excellent workability without generation of cuts or holes in the unvulcanized sheet, which is advantageous. The rubber composition for the inner liner of the present invention can further contain other components. Preferable examples thereof include carbon black, organic short fibers, a dispersion agent and the like, which can be suitably selected in accordance with the application. Preferable examples of other components further include various types of additives generally used for rubber compositions.

The radial tire which can run in the flat tire condition of the present invention may include at least one cap layer formed by coating organic fibers with rubber and provided between the tread rubber layer and the belt layer. This construction which includes the cap layer is advantageous in that the separation of the belt end portion and the buckling of the cord are suppressed, the ride comfort and control stability are improved, and noise and rolling resistance can be reduced. This cap layer preferably has a width covering the entire width of the belt layer, as indicated at 8 in Fig. 4, but may be provided at the two end portions of the belt layer in a manner of being divided widthwise of the belt layer, as indicated at 9 in Fig. 4. It is advantageous that the organic fibers in the cap layer of the present invention are arrayed substantially in parallel in the circumferential direction of the tire, in terms of improving the control stability and reducing rolling resistance.

Examples of the organic fibers to be employed in the cap layer of the present invention include nylon fibers, polyethylene terephthalate (PET) fibers, polyethylene naphthalate (PEN) fibers, rayon fibers or aramid fibers. Among these examples, the polyethylene naphthalate (PEN) fibers have a far higher tensile modulus of elasticity than those of the nylon or PET, and thus compensate for the insufficient rigidity of the belt in the circumferential direction thereof resulted from the use of the metal wire bundles of relatively small diameter (the metal wires of relatively small diameter are used in order to reduce weight in the present invention) and significantly reduces road noise.

The pneumatic run-flat tire of the present invention is constructed, as shown in Fig. 3 as a lefthand half sectional view of one embodiment, to include: a carcass layer 3 made of at least one radial carcass ply extended toroidally between a pair of bead cores 1 and having two end portions wound around the bead core from the axially inner side to the outer side of the bead portions; a side rubber layer 5 arranged on the outer side of the carcass layer at the side region in the axial direction of the tire to form a side portion; a tread rubber layer 7 arranged on the outer side of the carcass layer at the crown region in the tire radial direction to form a treading portion; a belt layer 6 composed of at least two belt plies arranged between the tread rubber layer and said carcass layer at the crown region to form a reinforcing belt; an inner liner 4 arranged on the entire face of the carcass layer at the inner side of the tire to form an airtight layer; and a bead filler 2 arranged between a carcass layer main body portion extending from one bead core to the other and a turn-up portion wound on the one bead core. The pneumatic run-flat tire of the present invention further includes a side reinforcing layer 10 (as hatched in Figs. 3 and 4) interposed between the carcass layer and the inner liner from the bead portion to the shoulder portion and containing at least one reinforcing rubber layer having a generally crescent sectional shape along the rotating axis of the tire. Also, at least one belt ply of the belt layer 6 comprises metal single wires with a rubber coating, and most of the metal single wires in the ply are present as metal wire bundles each composed of a plural n-number of metal wires (as exemplified by three-metal wire bundles in Fig. 2) arranged in parallel without being twined, and the metal wire bundles are arrayed planarly in parallel to each other and being spaced from each other with a distance therebetween in the tire widthwise direction, Furthermore, the inner liner 4 has a thickness of 0.1 to 0.3 mm.

In short, the rigidity of the side portion is strengthened by providing the side reinforcing layer made of the reinforcing rubber layer having the generally crescent sectional shape, so that the load of the vehicle is supported when the internal pressure of the tire is decreased and the running in the flat tire condition is excellent. In addition, the weight of the tire is reduced by employing the light and strong belt layer, which is made of the metal wire bundles arrayed with spacing therebetween, and the inner liner having a thin gauge.

The method for manufacturing the tire of the present invention is not especially restricted or limited but can be exemplified by the general tire manufacturing method. Such a conventional method includes the steps of: preparing respective members as elongate sheet-like products by calendering or extrusion; cutting the members to size lengths according to the individual tires; and building the cut sheets on a molding drum, thereby to form a green tire before being vulcanized. The tire of the present invention can also be manufactured by this method.

The pneumatic tires are generally employed by mounting them, according to the individual size, on the standard rims determined by the standards issued by JATMA (Japan), TRA (USA), ETRTO (Europe) and the like. These standard rims are usually called "normal rims".

In the present specification, in accordance with this practice, the "normal rims" indicate the standard rims in the application sizes, as defined in YEAR BOOK of Year 2000 issued by TRA (Tire and Rim Association) of USA. Likewise, the "normal load" and the "normal internal pressure" indicate the maximum load and the air pressure corresponding to the maximum load in the applied size / ply rating, as defined in YEAR BOOK of Year 2000 issued by TRA of USA. Here, the "load" represents the maximum load (or the maximum load capacity) of a single tire in the applied size specified in the following standards; the "internal pressure" represents the air pressure corresponding to the maximum load (or the maximum loading capacity) of a single tire in the applied size specified in the following standards; and the "rim" represents the standard rim (or "Approved Rim" or "Recommended Rim") in the applied size described in the following standards.

The present invention will be specifically described hereinafter by using examples and comparative examples so as to confirm the effects thereof. The present invention is not limited to these examples.

There were manufactured run-flat tires of prior art example 1, comparative example 1 and examples 1-3 of the present invention, each having a side reinforcing layer made of one reinforcing rubber layer, the reinforcing rubber layer being interposed between the carcass layer and the inner liner from the bead portion to the shoulder portion and having the generally crescent sectional shape along the tire rotating axis, as shown in Fig. 3. The tires had a radial structure of a size 225/60R16 and had the diameters of the metal single wires, the structures and specifications of the cords, the embedding densities of the cords, the maximum thicknesses of the side reinforcing layers, and the thicknesses of the inner liners, as summarized in Table 1. Here, the side reinforcing rubber layers having the crescent sectional shape were prepared by blending rubber, as disclosed in Japanese Patent Application No. 11-245636, to have a hardness of 90. The inner liners of prior art example 1 and comparative example 1 were prepared by blending rubber for the conventional inner liner containing NR, Bromobutyl rubber, GPF in amounts of 70/30/55 parts by weight, respectively. The inner liners of examples 1 to 3 were prepared by blending rubber which contains 180 parts by weight of flat clay, in addition to 70/30/55 parts by weight of NR/Bromobutyl rubber/GPF.

The belt layers of the tires of prior art example 1 and comparative example 1 were made of two intersecting plies which had been prepared by coating 1 x 5 twined wire cords of metal wires having a diameter of 0.23 mm with rubber, and the belt layers of examples 1 to 3 were made of two intersecting plies which had been prepared by coating bundle (each bundle containing three metal single wires) arrays of untwined metal single wires of diameters of 0.21 and 0.26 mm, with rubber.

In order to confirm the effects of the present invention, for each of the tires manufactured as described above, the weight of the tire was measured, and the durability of the running in the flat tire condition and the ride comfort were tested. The results are enumerated in Table 1, as relative indexes with respect to the reference value 100 of the comparative example 1. Here, the larger the relative evaluation index, the better the result, and the smaller the relative evaluation index, the poorer the result.

**[Table 1]**

| | Items | Prior Art Example 1 | Comparative Example 1 | Example 1 | Example 2 | Example 3 |
|---|---|---|---|---|---|---|
| Tire Specifications | Dia. (mm) of Metal Single Wires | 0.23 | 0.23 | 0.21 | 0.21 | 0.26 |
| | Cord Structure | Twined Wires | Twined Wires | Single Wire Bundle | Single Wire Bundle | Single Wire Bundle |
| | Cord Specifications | 1×5 | 1×5 | Three-Bundle | Three-Bundle | Three-Bundle |
| | Embedded Cord Density (No./50mm) | 37 | 37 | 55 | 55 | 40 |
| | Max. Thickness (mm) of Side Reinforcing Layer | 10 | 9 | 10 | 9 | 10 |
| | Thickness (mm) of Inner Liner | 0.7 | 0.7 | 0.3 | 0.3 | 0.3 |
| Evaluation Tests | Durability at the Time of Running in the Flat Tire Condition | 150 | 100 | 150 | 120 | 150 |
| | Wt. (Kg) of Tires | 16 | 15.7 | 15.4 | 15.1 | 15.6 |
| | Ride Comfort | 90 | 100 | 110 | 120 | 108 |

It has been confirmed that the performance of the running in the flat tire condition of the tires of the present invention (examples 1 to 3) are equal or superior to those of the comparative tire, the weight of the present tire is lighter and the ride comfort thereof is significantly improved. Here, the tire performances were tested, as follows.

### Durability at the time of running in the flat tire condition

A test tire was attached to the front right wheel of a Japanese passenger car of the 3,000 cc class. This vehicle was driven at a speed of 60 Km/h on a test course composed mainly of straight courses with the tire having no internal pressure and without a valve core. Here, the durability at the time of running in the flat tire condition was defined as the distance driven before the driver felt abnormal vibrations, and the result thereof was indicated as a relative index with respect to the reference value 100 of comparative example 1.

### Ride comfort Evaluation

The test tire was set on a tire testing iron drum having an external diameter of 2 m and projections provided thereon of a width of 2 cm and a height of 1 cm, with a normal load applied on the tire, and the drum was rotated. The waveforms of vibration in the vertical loading directions when the tire rode over the projections of the drum were measured by an accelerator meter. An inverse number of the amplitude of a first period was obtained and was indicated as an index with respect to the reference value 100 of the tire of comparative example 1. Here, the larger the index, the better the ride comfort.

As has been described hereinbefore, the pneumatic radial time which can run in the flat tire condition of the present invention includes: the side reinforcing layer disposed on the carcass layer of the side region and having the generally crescent sectional shape; and the belt layer composed of the belt ply in which the metal wire bundles (each bundle containing plural untwined metal wires arranged in parallel) are planarly arranged in parallel to each other and being spaced from each other with a distance therebetween in the tire widthwise direction, and the inner liner has the thickness of 0.1 to 0.3 mm. By this construction, the radial tire which can run in the flat tire condition of the present invention reliably maintains excellent ride comfort and low rolling resistance, which are performances especially required of light-weight tires of passenger cars, during normal running, and then effects safe and reliable running in the flat tire condition when the tire is punctured so that the internal pressure thereof is lowered.

## Claims

1. A pneumatic run-flat tire comprising:
a carcass layer (3) made of at least one radial carcass ply extended toroidally between a pair of bead cores (1) and having two end portions each wound around said bead core from the inner side to the outer side of the bead core in the axial direction of the tire;
a side rubber layer (5) arranged on the outer side of said carcass layer at the side region in the axial direction of the tire to form an outer side portion;
a tread rubber layer (7) arranged on the outer side of the carcass layer at the crown region in the tire radial direction to form a treading portion;
a belt layer (6) composed of at least two belt plies arranged between said tread rubber layer and said carcass layer at the crown region to form a reinforcing belt;
an inner liner (4) arranged on the entire face of said carcass layer at the inner side thereof;
a bead filler (2) arranged between a carcass layer main body portion extending from said one bead core to the other and a turn-up portion wound on said one bead core; and
a side reinforcing layer (10) interposed between said carcass layer and said inner liner from the bead portion to the shoulder portion and including at least one reinforcing rubber layer having a generally crescent sectional shape along the rotating axis of the tire,
and said inner liner has a thickness of 0,1 to 0,3 mm,
**characterized in that**
at least one belt ply of said belt layer comprises metal single wires with a rubber coating, and most of the metal single wires in said ply are present as metal wire bundles each composed of a plural n-number of metal wires arranged in parallel without being twined, the metal wire bundles being arrayed planarly in parallel to each other and being spaced from each other with a distance therebetween in the widthwise direction, wherein a material used in said reinforcing rubber layer has a loss tangent (tan δ) of no more than 0.25 at 25 °C.

2. A pneumatic run-flat tire as claimed in Claim 1, **characterized in that** the material used in said reinforcing rubber layer has a hardness (Hd) of no less than 75 at 25 °C.

3. A pneumatic run-flat tire as claimed in Claim 1 or 2, **characterized in that** said side reinforcing layer has a maximum thickness of no more than 10 mm.

4. A pneumatic run-flat tire as claimed in any of Claims 1 to 3, **characterized in that** the ratio (D_{S}/D_{L}) of the shorter dimension D_{S} with respect to the longer dimension D_{L} of the metal wire bundle in a section normal to said metal wire bundle is about 1/n for the number n of the metal single wires in said metal wire bundle.

5. A pneumatic run-flat tire as claimed in any of Claims 1 to 4, **characterized in that** the number n of the metal single wires in said metal wire bundle is two to six.

6. A pneumatic run-flat tire as claimed in any of Claims 1 to 5, **characterized in that** the metal single wires in said belt layer have a diameter of 0.18 to 0.35 mm and a tensile strength of 3130 to 4410 MPa.

7. A pneumatic run-flat tire as claimed in any of Claims 1 to 6, **characterized in that** the metal single wires in said belt layer have a diameter of 0.19 to 0.28 mm and a tensile strength of 3430 to 4410 MPa.

8. A pneumatic run-flat tire as claimed in any of Claims 1 to 7, **characterized in that** the material of the metal single wires in said belt layer contains at least 0.7 wt. % of carbon.

9. A pneumatic run-flat tire as claimed in any of Claims 1 to 8, **characterized in that** the metal single metal wires in said belt layer is arranged so as to form an angle of 15 to 35 degrees with respect to the equatorial plane of the tire.

10. A pneumatic run-flat tire as claimed in any of Claims 1 to 9, **characterized in that** said inner liner contains 60 to 320 parts by weight of a plate-shaped inorganic material having an aspect ratio of 5 to 30, with respect to 100 parts by weight of a rubber component composed of 0 to 40 parts by weight of butyl-based rubber containing 40 wt. % or more of halogenated butyl rubber and 60 to 100 parts by weight of diene-based rubber.

11. A pneumatic run-flat tire as claimed in any of claims 1 to 10, **characterized by** further comprising at least one cap layer interposed between said tread rubber layer and said belt layer and composed of organic fibers coated with rubber.

## Patentansprüche

1. Luftreifen mit Notlaufeigenschaften, der umfaßt:
eine Karkassenschicht (3), die aus mindestens einer radialen Karkassenlage hergestellt ist, die sich torusförmig zwischen einem Paar von Wulstkernen (1) erstreckt und zwei Endteile besitzt, die jeweils um den Wulstkern von der Innenseite zur Außenseite des Wulstkerns in axialer Richtung des Reifens gewunden ist;
eine Seitengummischicht (5), die an der Außenseite der Karkassenschicht am Seitenbereich in axialer Richtung des Reifens angebracht ist, und so einen Außenseitenteil bildet;
eine Laufflächengummischicht (7), die an der Außenseite der Karkassenschicht im Kronenbereich in radialer Richtung des Reifens angebracht ist und so einen Laufflächenteil bildet;
eine Gürtelschicht (6), die aus mindestens zwei Gürtellagen besteht, die zwischen der Laufflächengummischicht und der Karkassenschicht im Kronenbereich angeordnet sind und so einen Verstärkungsgürtel bildet;
eine Innenauskleidung (4) die auf der gesamten Fläche der Karkassenschicht an ihrer Innenseite angebracht ist;
einen Wulstfüllstoff (2), der zwischen einem Karkassenschicht-Hauptkörperteil, der sich von einem Wulstkern zum anderen erstreckt, und einem nach oben umgebogenen Teil, der um diesen einen Wulstkern gewunden ist, angeordnet ist; und
eine Seitenverstärkungsschicht (10), die zwischen der Karkassenschicht und der Innenauskleidung vom Wulstteil zum Schulterteil angeordnet ist und mindestens eine Verstärkungsgummischicht mit einem im allgemeinen halbmondförmigen Schnittprofil entlang der Rotationsachse des Reifens einschließt und die Innenauskleidung hat eine Dicke von 0,1 bis 0,3 mm;
**dadurch gekennzeichnet, daß** mindestens ein Gürtellage der Gürtelschicht Metalleinzeldrähte mit einer Gummibeschichtung umfaßt, und die meisten Metalleinzeldrähte in der Lage als Metalldrahtbündel vorliegen, die jeweils zusammengesetzt sind aus mehreren Metalldrähten der Zahl n, die parallel angeordnet sind ohne gedreht zu sein, wobei die Metalldrahtbündel planar parallel zueinander angeordnet sind und voneinander beabstandet sind mit einem Abstand zwischen ihnen in Breitenrichtung, wobei ein Material, das in der Verstärkungsgummischicht verwendet wird, eine Verlusttangente (tanδ) von nicht mehr als 0,25 bei 25°C besitzt.

2. Luftreifen mit Notlaufeigenschaften wie in Anspruch 1 beansprucht, **dadurch gekennzeichnet, daß** das in der Verstärkungsgummischicht verwendete Material eine Härte (hardness Hd) von nicht weniger als 75 bei 25°C besitzt.

3. Luftreifen mit Notlaufeigenschaften wie in Anspruch 1 oder 2 beansprucht, **dadurch gekennzeichnet, daß** die Seitenverstärkungsschicht eine maximale Dicke von nicht mehr als 10 mm besitzt.

4. Luftreifen mit Notlaufeigenschaften wie in mindestens einem der Ansprüche 1 bis 3 beansprucht, **dadurch gekennzeichnet, daß** das Verhältnis (D_{S}/D_{L}) der kürzeren Dimension D_{S} in bezug auf die längere Dimension D_{L} des Metalldrahtbündels in einem Ausschnitt normal zum Metalldrahtbündel etwa 1/n ist für die Zahl n der Metalleinzeldrähte im Metalldrahtbündel.

5. Luftreifen mit Notlaufeigenschaften wie in mindestens einem der Ansprüche 1 bis 4 beansprucht, **dadurch gekennzeichnet, daß** die Zahl n der Metalleinzeldrähte im Metalldrahtbündel 2 bis 6 ist.

6. Luftreifen mit Notlaufeigenschaften wie in mindestens einem der Ansprüche 1 bis 5 beansprucht, **dadurch gekennzeichnet, daß** die Metalleinzeldrähte in der Gürtelschicht einen Durchmesser von 0,18 bis 0,35 mm und eine Zugfestigkeit von 3130 bis 4410 MPa haben.

7. Luftreifen mit Notlaufeigenschaften wie in mindestens einem der Ansprüche 1 bis 6 beansprucht, **dadurch gekennzeichnet, daß** die Metalleinzeldrähte in der Gürtelschicht einen Durchmesser von 0,19 bis 0,28 mm und eine Zugfestigkeit von 3430 bis 4410 MPa haben.

8. Luftreifen mit Notlaufeigenschaften wie in mindestens einem der Ansprüche 1 bis 7 beansprucht, **dadurch gekennzeichnet, daß** das Material der Metalleinzeldrähte in der Gürtelschicht mindestens 0,7 Gew.-% Kohlenstoff enthält.

9. Luftreifen mit Notlaufeigenschaften wie in mindestens einem der Ansprüche 1 bis 8 beansprucht, **dadurch gekennzeichnet, daß** die Metalleinzeldrähte in der Gürtelschicht so angeordnet sind, daß sie einen Winkel von 15 bis 35 Grad in bezug auf die Äquatorialebene des Reifens bilden.

10. Luftreifen mit Notlaufeigenschaften wie in mindestens einem der Ansprüche 1 bis 9 beansprucht, **dadurch gekennzeichnet, daß** die Innenauskleidung 60 bis 320 Gew.-% eines plattenförmigen anorganischen Materials mit einem Aspektverhältnis von 5 bis 30 in bezug auf 100 Gew.-Teile einer Gummikomponente enthält, die aus 0 bis 40 Gew.-Teilen eines Gummis auf Butylbasis, der 40 Gew.-% oder mehr halogenierten Butylgummi enthält, und 60 bis 100 Gew.-Teilen eines Kautschuks auf Dienbasis zusammengesetzt ist.

11. Luftreifen mit Notlaufeigenschaften wie in mindestens einem der Ansprüche 1 bis 10 beansprucht, **dadurch gekennzeichnet, daß** er weiter mindestens eine Kappenschicht umfaßt, die zwischen der Laufflächengummischicht und der Gürtelschicht angebracht ist, und aus anorganischen, mit Gummi beschichteten Fasern zusammengesetzt ist.

## Revendications

1. Pneumatique pouvant rouler à plat comprenant :
une couche de carcasse (3) constituée d'au moins un pli de carcasse radiale à extension toroïdale entre une paire de tringles de talon (1) et ayant deux parties d'extrémité qui sont toutes deux enroulées autour de ladite tringle de talon entre le côté axialement intérieur et le côté axialement extérieur de la partie de talon dans la direction axiale du pneumatique ;
une couche latérale en caoutchouc (5), disposée sur le côté extérieur de la couche de carcasse au niveau de la région latérale dans la direction axiale du pneumatique, pour former une partie latérale extérieure ;
une couche de bande de roulement (7) en caoutchouc disposée sur le côté extérieur de la couche de carcasse au niveau de la zone de couronne dans la direction radiale du pneumatique pour former une partie de bande de roulement ;
une couche faisant nappe d'armature (6) composée d'au moins deux plis de nappe d'armature disposés entre ladite couche de bande de roulement en caoutchouc et ladite couche de carcasse au niveau de la zone de couronne pour former une nappe d'armature de renforcement ;
une chemise intérieure (4) disposée sur toute la surface de ladite couche de carcasse du côté intérieur de celle-ci pour former une couche hermétique ;
une bandelette de support de talon (2) disposée entre une partie principale de la couche de carcasse qui s'étend entre ladite une tringle de talon et l'autre tringle de talon et une partie en retournement enroulée autour de ladite une tringle de talon ; et
une couche de renforcement latéral (10) interposée entre ladite couche de carcasse et ladite chemise intérieure depuis la partie de talon jusqu'à la partie d'épaulement et comprenant au moins une couche de renforcement en caoutchouc ayant généralement une forme de croissant en suivant l'axe de rotation du pneumatique, et où ladite chemise a une épaisseur comprise entre 0,1 et 0,3 mm,
**caractérisé en ce qu'**
au moins un pli de nappe d'armature de ladite couche faisant nappe d'armature comprend des fils métalliques unitaires ayant un revêtement en caoutchouc, et **en ce que** la plupart des fils métalliques unitaires dudit pli se présentent sous la forme de faisceaux de fils métalliques qui sont chacun composés d'un nombre pluriel n de fils métalliques disposés parallèlement les uns aux autres sans être torsadés, les faisceaux de fils métalliques étant disposés en nappe dans un plan parallèlement les uns aux autres et séparés les uns des autres d'une certaine distance dans la direction de la largeur du pneumatique, et **en ce qu'**un matériau utilisé dans ladite couche de renforcement en caoutchouc a une tangente d'angle de pertes (tangente δ) inférieure ou égale à 0,25 à 25°C.

2. Pneumatique pouvant rouler à plat selon la revendication 1, **caractérisé en ce que** le matériau utilisé dans ladite couche de renforcement en caoutchouc a une dureté (Hd) supérieure ou égale à 75 à 25°C.

3. Pneumatique pouvant rouler à plat selon la revendication 1 ou 2, **caractérisé en ce que** ladite couche de renforcement latéral a une épaisseur maximum inférieure ou égale à 10 mm.

4. Pneumatique pouvant rouler à plat selon l'une quelconque des revendications 1 à 3, **caractérisé en ce que** le rapport (D_{S} / D_{L}) entre la plus petite dimension D_{S} et la plus grande imension D_{L} du faisceau de fils métalliques dans une section perpendiculaire audit faisceau de fils métalliques est environ égal 1 / n, n étant le nombre de fils métalliques unitaires dans ledit faisceau de fils métalliques.

5. Pneumatique pouvant rouler à plat selon l'une quelconque des revendications 1 à 4, **caractérisé en ce que** le nombre n de fils métalliques unitaires dans ledit faisceau de fils métalliques est compris entre deux et six.

6. Pneumatique pouvant rouler à plat selon l'une quelconque des revendications 1 à 5, **caractérisé en ce que** les fils métalliques unitaires de ladite couche faisant nappe d'armature ont un diamètre compris entre 0,1 et 0,35 mm et une résistance à la tension comprise entre 3130 et 4410 MPa.

7. Pneumatique pouvant rouler à plat selon l'une quelconque des revendications 1 à 6, **caractérisé en ce que** les fils métalliques unitaires de ladite couche faisant nappe d'armature ont un diamètre compris entre 0,19 et 0,28 mm et une résistance à la tension comprise entre 3430 et 4410 MPa.

8. Pneumatique pouvant rouler à plat selon l'une quelconque des revendications 1 à 7, **caractérisé en ce que** les fils métalliques unitaires de ladite couche faisant nappe d'armature contiennent au moins 0,7% en poids de carbone.

9. Pneumatique pouvant rouler à plat selon l'une quelconque des revendications 1 à 8, **caractérisé en ce que** les fils métalliques unitaires de ladite couche faisant nappe d'armature sont disposés de façon à former un angle compris entre 15 et 35 degrés par rapport au plan équatorial du pneumatique.

10. Pneumatique pouvant rouler à plat selon l'une quelconque des revendications 1 à 9, **caractérisé en ce que** ladite chemise intérieure contient entre 60 et 320 parties en poids d'un matériau non organique en forme de disque ayant un rapport d'aspect compris entre 5 et 30, par rapport aux 100 parties en poids d'un composant en caoutchouc composé de 0 à 40 parties en poids de caoutchouc à base de butyl contenant 40 % en poids ou plus de caouthouc à base de butyl halogéné et de 60 à 100 parties en poids de caoutchouc à base de diène.

11. Pneumatique pouvant rouler à plat selon l'une quelconque des revendications 1 à 10, **caractérisé en ce qu'**il comprend en outre au moins une couche de recouvrement interposée entre ladite couche de bande de roulement et ladite couche faisant nappe d'armature et qui est composée de fibres organiques revêtues de caouthouc.
